# EUROPÄISCHE PATENTSCHRIFT

(11) **EP 3 501 075 B1**
(45) Veröffentlichungstag und Bekanntmachung des Hinweises auf die Patenterteilung: **19.08.2020**
(21) Anmeldenummer: 16775176.7
(22) Anmeldetag: 27.09.2016
(51) Int. Cl.: H02J 3/02, H02M 7/04, H02J 3/36

(54) **ANORDNUNG UND VERFAHREN ZUM ÜBERTRAGEN ELEKTRISCHER LEISTUNG**
ARRANGEMENT AND METHOD FOR TRANSMITTING ELECTRICAL POWER
ARRANGEMENT ET PROCÉDÉ DE TRANSMISSION DE PUISSANCE ÉLECTRIQUE

(43) Veröffentlichungstag der Anmeldung: 26.06.2019
(73) Patentinhaber: Siemens Aktiengesellschaft, 80333 München (DE)
(72) Erfinder: ACHENBACH, Sven, 91080 Spardorf (DE); ECKEL, Hans-Günter, 18059 Rostock (DE); PRIGNITZ, Cord, 18057 Rostock (DE)
(86) Internationale Anmeldenummer: PCT/EP2016/072959
(87) Internationale Veröffentlichungsnummer: WO 2018/059664

(56) Entgegenhaltungen:
- WO-A1-2010/115453
- WO-A1-2012/037965
- WO-A1-2013/189526
- WO-A1-2014/131454
- WO-A1-2014/131457
- CN-A- 102 222 929
- US-A1- 2011 140 511

## Beschreibung

Die Erfindung betrifft eine Anlage zum Übertragen elektrischer Leistung mit einem unidirektionalen Gleichrichter, der mit einem ersten Wechselspannungsnetz verbindbar ist, einer Umrichteranlage, die über eine Gleichspannungsverbindung mit dem unidirektionalen Gleichrichter verbunden ist, wobei mittels der Umrichteranlage eine elektrische Leistung einer Wechselspannungsquelle in eine Übertragungsleistung umwandelbar ist, die einen DC-Anteil und einen AC-Anteil aufweist und in die Gleichspannungsverbindung einspeisbar ist, sowie einer Kopplungseinrichtung zum Auskoppeln des AC-Anteils der Übertragungsleistung aus der Gleichspannungsverbindung und zum Einspeisen des AC-Anteils in das erste Wechselspannungsnetz.

Eine solche Anlage ist beispielsweise aus der US 8 120 202 B2 bekannt. Bei der bekannten Anlage sind Windkraftanlagen eines Windparks an das erste Wechselspannungsnetz angeschlossen. Die von den Windkraftanlagen erzeugte elektrische Leistung wird mittels der bekannten Anlage an ein mit der Umrichteranlage verbundenes Versorgungsnetz übertragen.

Mittels des unidirektionalen Gleichrichters ist eine Leistungsübertragung lediglich in eine Richtung möglich. Demnach kann das erste Wechselspannungsnetz grundsätzlich nicht ohne Weiteres über die Gleichspannungsverbindung mit elektrischer Energie versorgt werden. Zur Gewährleistung einer Energieversorgung des ersten Wechselspannungsnetzes und der Windkraftanlagen bei Schwachwindphasen wird bei der Anlage der US 8 120 202 B2 vorgeschlagen, dass mittels der Umrichteranlage elektrische Leistung aus dem Versorgungsnetz entnommen wird und als Übertragungsleistung in die Gleichspannungsverbindung eingespeist wird. Die Übertragungsleistung ist eine DC-Übertragungsleistung mit einem AC-Anteil. Mittels einer Kopplungseinrichtung, die eingangsseitig mit der Gleichspannungsverbindung und ausgangsseitig mit dem ersten Wechselspannungsnetz verbunden ist, wird der AC-Anteil der Übertragungsleistung aus der Gleichspannungsverbindung ausgekoppelt. Die Kopplungseinrichtung der bekannten Anlage umfasst zur Auskopplung des AC-Anteils einen Parallelzweig, der sich zwischen einem ersten und einem zweiten Gleichspannungspol der Gleichspannungsverbindung erstreckt. In dem Parallelzweig sind eine Kapazität und eine Induktivität angeordnet. Der AC-Anteil wird über die Induktivität und einen angeschlossenen Transformator zur Anpassung einer Spannungsamplitude aus der Gleichspannungsverbindung ausgekoppelt. Anschließend wird der AC-Anteil mittels eines mit dem Transformator verbundenen Leistungsanpassungsmoduls weiter an die Anforderungen des ersten Wechselspannungsnetzes angepasst und in das erste Wechselspannungsnetz eingespeist.

Die CN 102 222 929 A offenbart eine Anordnung einer Anbindung eines schwachen AC-Netzes an ein Versorgungsnetz mittels einer HGÜ. Auf der Seite des schwachen AC-Netzes ist eine Anbindung an die HGÜ mittels eines Diodengleichrichters vorgesehen. Zur Lösung des Problems eines "black start" des schwachen Netzes (Neustart des schwachen Netzes) wird vorgeschlagen, mittels eines Hilfsumrichters Leistung in das schwache Netz vom Versorgungsnetz aus zu beziehen. Dabei wandelt der Hilfsumrichter eine vom Umrichter bereitgestellte Gleichspannung in eine Wechselspannung auf dessen Wechselspannungsseite. Gleichzeitig arbeitet der Hilfsumrichter als aktiver Filter, um harmonische Stromanteile herauszufiltern, die durch das Gleichrichten des Stromes durch den Diodengleichrichter entstehen.

Gemäß der WO 2014/131454 A1 wird zur Versorgung des offshoreseitigen AC-Netzes die Gleichspannung in einer Gleichspannungsverbindung mittels eines Zusatzwechselrichters in eine Wechselspannung umgewandelt.

Die WO 2010/115453 A1 offenbart eine Anordnung zum Stabilisieren einer Gleichspannung in einem Gleichspannungsnetz mittels zum Gleichspannungsnetz parallel geschalteter Umrichter

Aufgabe der vorliegenden Erfindung ist es, eine Anlage der eingangs genannten Art vorzuschlagen, die gegenüber dem Stand der Technik kostengünstiger ist.

Die Aufgabe wird bei einer artgemäßen Anlage dadurch gelöst, dass die Kopplungseinrichtung einen Frequenzumrichter zum Umformen einer Frequenz, Amplitude und Phasenlage des AC-Anteils umfasst.

Erfindungsgemäß ist der Frequenzumrichter der Kopplungseinrichtung, der in diesem Zusammenhang auch als Umformer bezeichnet werden kann, dazu eingerichtet, den AC-Anteil der Übertragungsleistung gemäß dessen Frequenz, Amplitude und Phasenlage anzupassen.

Ein Vorteil der erfindungsgemäßen Anlage ist, dass die Verwendung des Frequenzumrichters es erlaubt, auf den Transformator und die Induktivität der bekannten Anlage zu verzichten. Daraus ergeben sich ein stark verringerter Platzbedarf der Kopplungseinrichtung sowie ein entscheidender Kostenvorteil. Der Kostenvorteil ist besonders groß, wenn das erste Wechselspannungsnetz und damit auch die Kopplungseinrichtung offshore, also in einem Meer beziehungsweise auf wenigstens einer im Meer aufgestellten Plattform angeordnet sind. Der Frequenzumrichter ist dazu geeignet die Frequenz des AC-Anteils anzupassen, so dass eine Auskopplung des AC-Anteils über eine LC-Kombination nicht notwendig ist. Ferner kann der Frequenzumrichter auch die Amplitude des AC-Anteils angepasst werden, so dass eine Übertragung des AC-Anteils über einen Leistungstransformator ebenfalls nicht notwendig ist. Die Auskopplung des AC-Anteils aus der Gleichspannungsverbindung und Einspeisung des AC-Anteils in das erste Wechselspannungsnetz mittels der erfindungsgemäßen Anlage erlaubt eine zuverlässige Energieübertragung in das erste Wechselspannungsnetz. Somit kann das erste Wechselspannungsnetz auch unter Inselnetzbedingungen stets zuverlässig mit einer notwendigen Energie versorgt werden.

Zweckmäßigerweise weist der Frequenzumrichter eingangsseitig einen einphasigen Wechselspannungsanschluss zum Verbinden mit der Gleichspannungsverbindung sowie ausgangsseitig einen mehrphasigen Wechselspannungsanschluss zum Verbinden mit dem mehrphasigen ersten Wechselspannungsnetz. Ist das erste Wechselspannungsnetz beispielsweise dreiphasig, so weist der Frequenzumrichter geeigneterweise ausgangsseitig einen entsprechend dreiphasigen Wechselspannungsanaschluss.

Vorzugsweise ist der Frequenzumrichter ein Mittelspannungs-Frequenzumrichter, der in diesem Zusammenhang auch als Mittelspannungsumformer bezeichnet wird. Solche Mittelspannungsumformer sind auf dem Markt als Produkt erhältlich, beispielsweise für die Stromversorgung von Bahnnetzen. Sie sind kompakt und gewichtsarm genug, um auch auf Offshore-Plattformen angeordnet zu werden. Die Verwendung eines marktüblichen Mittelspannungsumformers erlaubt vorteilhaft eine weitere Senkung der Kosten der erfindungsgemäßen Anlage. Mittelspannung bezeichnet in diesem Zusammenhand einen Spannungsbereich unterhalb von 30 kV.

Bevorzugt ist der Frequenzumrichter ein modularer Mehrstufenfrequenzumrichter. Der modulare Mehrstufenumrichter ist modular aufgebaut, das heißt insbesondere, dass sich jeweils zwischen einem eingangsseitigen Wechselspannungsanschluss und einem ausgangsseitigen Wechselspannungsanschluss des modularen Mehrstufenumrichters erstreckende Phasenzweige jeweils eine Reihenschaltung von zweipoligen Schaltmodulen umfassen, wobei jedes Schaltmodul Leistungshalbleiterschalter und einen Energiespeicher umfasst. Die Schaltmodule sind voneinander unabhängig ansteuerbar. Die Verwendung des modularen Mehrstufenumrichters erlaubt eine besonders flexible Anpassung des einphasigen AC-Anteils der Übertragungsleistung an eine dreiphasige Wechselspannung des ersten Wechselspanungsnetzes.

Gemäß der Erfindung ist der Frequenzumrichter eingangsseitig in einer Parallelschaltung zum unidirektionalen Gleichrichter mit der Gleichspannungsverbindung und ausgangsseitig mit dem ersten Wechselspannungsnetz verbindbar. Der Frequenzumrichter ist demnach parallel zum unidirektionalen Gleichrichter geschaltet.

Erfindungsgemäß sind ein erster eingangsseitiger Wechselspannungsanschluss des Frequenzumrichters über eine erste Kapazität mit einem ersten Gleichspannungspol der Gleichspannungsverbindung und ein zweiter eingangsseitiger Wechselspannungsanschluss des Frequenzumrichters über eine zweite Kapazität mit einem zweiten Gleichspannungspol der Gleichspannungsverbindung verbindbar. Die kapazitive Verbindung mit den Gleichspannungspolen bedeutet insbesondere, dass eine Potenzialtrennung zwischen dem Frequenzumrichter und den Gleichspannungspolen vorgesehen ist.

Gemäß einer weiteren vorteilhaften Ausführungsform der Erfindung umfasst die Kopplungseinrichtung einen Parallelzweig, der sich zwischen einem ersten und einem zweiten Gleichspannungspol der Gleichspannungsverbindung erstreckt, und in dem eine erste und eine zweite Kapazität angeordnet sind, wobei ein erster eingangsseitiger Wechselspannungsanschluss des Frequenzumrichters mit einem Potenzialpunkt zwischen den beiden Kapazitäten und der Frequenzumrichter ausgangsseitig dem ersten Wechselspannungsnetz verbindbar ist. Die beiden Kapazitäten verhindern insbesondere, dass Gleichströme aus der Gleichspannungsverbindung in den Frequenzumrichter hinein fließen können.

In den zuvor beschriebenen Ausführungsformen der Erfindung kann die jeweilige Kapazität durch einzelne oder eine geeignete Reihenschaltung von Kondensatoren realisiert sein.

Vorzugsweise umfasst die Umrichteranlage einen Spannungszwischenkreisumrichter (voltage sourced converter, VSC), der gleichspannungsseitig mit der Gleichspannungsverbindung und wechselspannungsseitig mit einem zweiten Wechselspannungsnetz verbindbar ist. Falls das erste Wechselspannungsnetz und der unidirektionale Gleichrichter auf hoher See angeordnet sind, so kann der Spannungszwischenkreisumrichter an Land angeordnet und wechselspannungsseitig mit einem landseitigen Versorgungsnetz verbindbar sein. Spannungszwischenkreisumrichter umfassen ein- und abschaltbare Leistungshalbleiter und sind daher selbstgeführt. Der Spannungszwischenkreisumrichter kann zur Erzeugung einer DC-Übertragungsleistung derart geregelt werden, dass gleichspannungsseitig eine Gleichspannung erzeugt wird, die einen Gleichspannungsanteil und einen Wechselspannungsanteil aufweist. Die Gleichspannung ist demnach nicht konstant in der Zeit, ändert jedoch nicht ihre Polarität.

Als besonders vorteilhaft wird angesehen, wenn der Spannungszwischenkreisumrichter ein modularer Mehrstufenumrichter ist. Der modulare Mehrstufenumrichter weist, wie zuvor beschrieben, in jedem Phasenzweig in Reihe geschaltete Schaltmodule auf. Die Leistungshalbleiterschalter und der Energiespeicher der Schaltmodule können beispielsweise miteinander in einer dem Fachmann bekannten Halbbrückenschaltung oder einer dem Fachmann ebenfalls bekannten Vollbrückenschaltung miteinander verschaltet sein.

Gemäß einer Ausführungsform der Erfindung umfasst die Umrichteranlage einen Wechselrichter, der gleichspannungsseitig mit der Gleichspannungsverbindung und wechselspannungsseitig mit einem zweiten Wechselspannungsnetz verbindbar ist, und einen Hilfsumformer, der eingangsseitig mit dem zweigen Wechselspannungsnetz und ausgangsseitig parallel zum Wechselrichter mit der Gleichspannungsverbindung verbindbar und dazu eingerichtet ist, eine Eingangswechselspannung in den AC-Anteil der Übertragungsspannung umzuwandeln. Gemäß dieser Ausführungsform der Erfindung wird der AC-Anteil der Übertragungsleistung mittels eines separaten Hilfsumformers erzeugt. Die in diesem Zusammenhang verwendete Bezeichnung "Wechselrichter" spiegelt den Umstand wider, dass die Leistungsübertragung in einem Normalbetrieb der Anlage vom ersten Wechselspannungsnetz über den unidirektionalen Gleichrichter und den Wechselrichter in das zweite Wechselspannungsnetz erfolgt. Es ist jedoch im Allgemeinen möglich, den Wechselrichter auch in einem Gleichrichterbetrieb einzusetzen.

Der Wechselrichter kann ein selbstgeführter Umrichter, insbesondere ein modularer Mehrstufenumrichter sein.

Gemäß einer Ausführungsform der Erfindung ist der unidirektionale Gleichrichter ein Diodengleichrichter. Diodengleichrichter sind besonders einfach und robust in Betrieb. Zugleich sind sie beispielsweise gegenüber selbstgeführten Umrichtern vergleichsweise kompakt und gewichtsarm. Zudem ist der Diodengleichrichter relativ verlustarm im Betrieb. Der Diodengleichrichter kann zum Beispiel als eine Sechspuls- eine Zwölfpuls oder eine 24-Puls-Brücke realisiert sein.

Die Erfindung betrifft ferner ein Verfahren zum Übertragen elektrischer Leistung in ein erstes Wechselspannungsnetz, das mittels eines unidirektionalen Gleichrichters und einer Gleichspannungsverbindung mit einer Umrichteranlage verbindbar ist.

Ein solches Verfahren ist aus der zuvor genannten Druckschrift US 8 120 202 B2 bereits bekannt.

Die Aufgabe der Erfindung ist es, ein artgemäßes Verfahren bereitzustellen, das möglichst kostengünstig durchgeführt werden kann.

Die Aufgabe wird bei einem artgemäßen Verfahren dadurch gelöst, dass mittels der Umrichteranlage eine elektrische Leistung einer Wechselspannungsquelle in eine Übertragungsleistung umgewandelt wird, die einen DC-Anteil und einen AC-Anteil aufweist, die Übertragungsleistung in die Gleichspannungsverbindung eingespeist und mittels der Gleichspannungsverbindung übertragen wird und der AC-Anteil mittels einer Kopplungseinrichtung aus der Gleichspannungsverbindung ausgekoppelt und in das erste Wechselspannungsnetz eingespeist wird, wobei die Kopplungseinrichtung einen Frequenzumrichter umfasst, mittels dessen eine Frequenz, eine Amplitude und eine Phasenlage des AC-Anteils vor der Einspeisung in das erste Wechselspannungsnetz umgeformt werden, wobei eine Anpassung an das erste Wechselspannungsnetz erreicht wird.

Die Vorteile des erfindungsgemäßen Verfahrens ergeben sich insbesondere aus der Möglichkeit, die Frequenz, die Amplitude und die Phasenlage des AC-Anteils mittels des Frequenzumrichters an die Anforderungen im ersten Wechselspannungsnetz anzupassen. Dadurch kann auf einen teuren Hochspannungstransformator und raumgreifende Drosseln verzichtet werden.

Im Zusammenhang mit dem erfindungsgemäßen Verfahren können im Übrigen alle zuvor beschriebenen Varianten und Ausführungsformen der erfindungsgemäßen Anlage eingesetzt werden.

Die Erfindung soll im Folgenden anhand der in den Figuren 1 bis 4 beschriebenen Ausführungsbeispiele weiter erläutert werden.
Figur 1 zeigt ein erstes Ausführungsbeispiel einer erfindungsgemäßen Anlage in einer schematischen Darstellung;
Figur 2 zeigt ein zweites Ausführungsbeispiel einer erfindungsgemäßen Anlage in einer schematischen Darstellung;
Figur 3 zeigt ein Ausführungsbeispiel eines selbstgeführten Umrichters in einer schematischen Darstellung;
Figur 4 zeigt ein schematisches Verlaufdiagramm eines Ausführungsbeispiels eines erfindungsgemäßen Verfahrens.

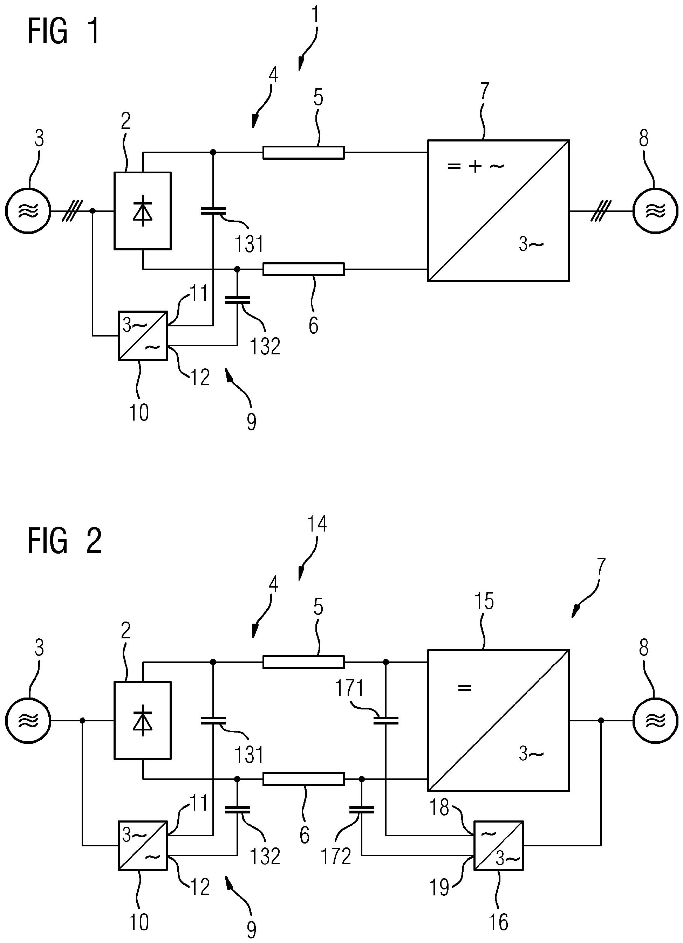

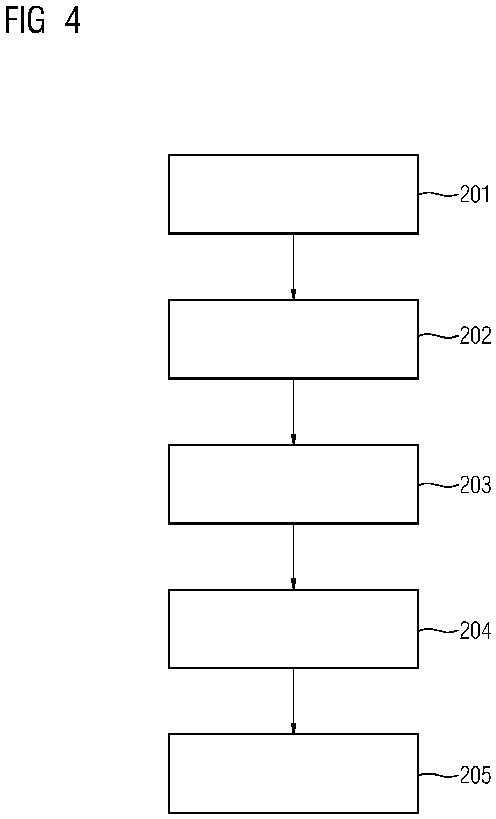

Im Einzelnen ist in Figur 1 eine Anlage 1 zum Übertragen elektrischer Leistung. Die Anlage 1 umfasst einen unidirektionalen Gleichrichter, der im in Figur 1 dargestellten Ausführungsbeispiel ein Diodengleichrichter 2 ist. Der Diodengleichrichter 2 ist wechselspannungsseitig mit einem ersten Wechselspannungsnetz 3 verbindbar. Das erste Wechselspannungsnetz ist im vorliegenden Ausführungsbeispiel ein Offshore-Wechselspannungsnetz, an das eine Vielzahl von Windkraftanlagen (in Figur 1 figürlich nicht dargestellt) angebunden ist. Gleichspannungsseitig ist der Diodengleichrichter 2 mit einer Gleichspannungsverbindung 4 verbunden, die einen ersten Gleichspannungspol 5 und einen zweiten Gleichspannungspol 6 aufweist. Der erste Gleichspannungspol 5 kann dabei beispielsweise ein positiver und der zweite Gleichspannungspol 6 beispielsweise ein negativer Pol sein. Die Gleichspannungsverbindung 4 erstreckt sich zwischen dem Diodengleichrichter 2 und einer Umrichteranlage 7. Die Länge der Gleichspannungsverbindung kann mehrere Hundert Kilometer betragen. Die Umrichteranlage 7 ist gleichspannungsseitig mit der Gleichspannungsverbindung 4 und wechselspannungsseitig mit einem Versorgungsnetz 8 verbindbar. Im in Figur 1 dargestellten Ausführungsbeispiel ist die Umrichteranlage 7 ein selbstgeführter Umrichter, der dazu eingerichtet ist, eine elektrische Leistung einer Wechselspannungsquelle, die im vorliegenden Beispiel das Versorgungsnetz 8 ist, in eine Übertragungsleistung umzuwandeln, die einen DC-Anteil und einen AC-Anteil aufweist, und in die Gleichspannungsverbindung einzuspeisen. Der selbstgeführte Umrichter ist hierbei ein modularer Mehrstufenumrichter in Vollbrückentopologie gemäß dem Ausführungsbeispiel der Figur 4.

Die Anlage 1 umfasst ferner eine Kopplungseinrichtung 9. Die Kopplungseinrichtung 9 weist einen Frequenzumrichter 10 auf, der eingangsseitig in einer Parallelschaltung zum Diodengleichrichter 2 mit der Gleichspannungsverbindung 4 und ausgangsseitig mit dem ersten Wechselspannungsnetz 3 verbunden bzw. verbindbar ist. Ein erster eingangsseitiger Wechselspannungsanschluss 11 des Frequenzumrichters 10 ist dabei über eine erste Kapazität 131 mit dem ersten Gleichspannungspol 5 der Gleichspannungsverbindung 4 und ein zweiter eingangsseitiger Wechselspannungsanschluss 12 des Frequenzumrichters 10 ist über eine zweite Kapazität 132 mit einem zweiten Gleichspannungspol 6 der Gleichspannungsverbindung 4 verbunden bzw. verbindbar. Die Kapazitäten 131, 132 sind als Kondensatoren realisiert.

Mittels der Umrichteranlage 7 kann demnach eine DC-Übertragungsleistung in die Gleichspannungsverbindung 4 eingespeist werden, die einen AC-Anteil und einen DC-Anteil aufweist. Gewissermaßen kann in diesem Zusammenhang davon gesprochen werden, dass der AC-Anteil auf den DC-Anteil aufmoduliert wird. Dies kann insbesondere durch eine geeignete Regelung und Steuerung der Umrichteranlage 7 durchgeführt werden, wobei gleichspannungsseitig eine Gleichspannung U erzeugt wird, die einen Gleichspannungsanteil Udc und einen Wechselspannungsanteil Uac aufweist, U = Udc + Uac. Dabei ist die Amplitude des Wechselspannungsanteils kleiner als die Amplitude des Gleichspannungsanteils, |Uac| < |Udc|. Der AC-Anteil der Übertragungsleistung kann mittels der Kopplungseinrichtung 9 aus der Gleichspannungsverbindung 4 ausgekoppelt und im ersten Wechselspannungsnetz 3 zur Verfügung gestellt werden. Auf diese Weise ist eine Energieversorgung eines oder mehrerer an das erste Wechselspannungsnetz angeschlossener Verbraucher, beispielsweise der Windkraftanlagen, ermöglicht.

Der aus der Gleichspannungsverbindung 4 ausgekoppelte AC-Anteil der Übertragungsspannung ist zunächst einphasig und weist im Allgemeinen eine Amplitude, Phasenlage und Frequenz auf, die an die Anforderungen des ersten Wechselspannungsnetzes nicht angepasst sind. Mittels des Frequenzumrichters 10, der als modularer Mehrstufenfrequenzumrichter (auch als "M2C" bezeichnet) ausgeführt ist, ist es möglich, sowohl die Frequenz als auch die Amplitude und Phasenlage derart anzupassen, dass die am Frequenzumrichter 10 ausgangsseitig bereitgestellte Wechselspannung ohne eine weitere Anpassung in das erste Wechselspannungsnetz 3 eingespeist werden kann.

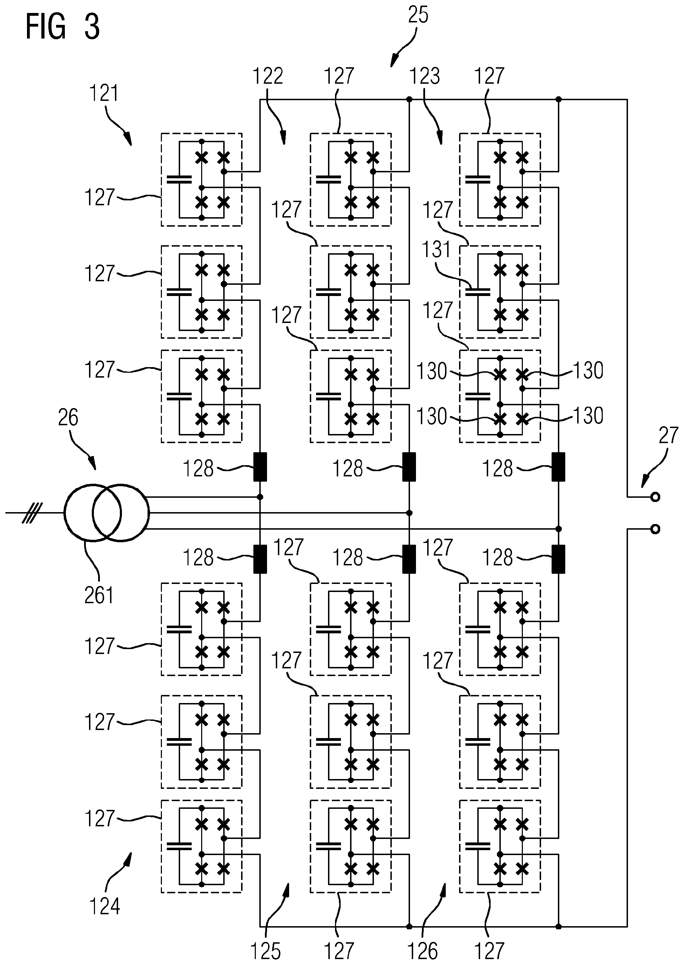

In Figur 2 ist eine Anlage 14 zum Übertragen elektrischer Leistung dargestellt. Zur Wahrung der Übersichtlichkeit sind gleiche und gleichartige Elemente in den Figuren 1 und 2 mit gleichen Bezugszeichen versehen. Entsprechendes gilt im Übrigen auch für die Figur 3. Zur Vermeidung von Wiederholungen wird im Folgenden lediglich auf die Unterschiede zwischen den Anlagen der Figuren 1 und 2 näher eingegangen.

Die Umrichteranlage 7 der Anlage 14 umfasst einen Wechselrichter 15, der gleichspannungsseitig mit der Gleichspannungsverbindung 4 und wechselspannungsseitig mit dem Versorgungsnetz 8 verbindbar ist. Ferner umfasst die Umrichteranlage 7 der Anlage 14 einen Hilfsumformer 16, der eingangsseitig mit dem Versorgungsnetz 8 und ausgangsseitig parallel zum Wechselrichter 15 mit der Gleichspannungsverbindung 4 verbindbar ist. Ein erster ausgangsseitiger Wechselspannungsanschluss 18 des Hilfsumformers 16 ist über eine weitere Kapazität 171 mit dem ersten Gleichspannungspol 5 der Gleichspannungsverbindung 4, ein zweiter ausgangsseitiger Wechselspannungsanschluss 19 mit dem zweiten Gleichspannungspol 6 über eine zusätzliche Kapazität 172 verbindbar. Der Hilfsumformer 16 ist dazu eingerichtet, eine Eingangswechselspannung, die im Versorgungsnetz 8 bereitgestellt ist, in den AC-Anteil der Übertragungsspannung umzuwandeln.

Die Übertragungsleistung, die mittels der Umrichteranlage 7 in die Gleichspannungsverbindung 4 eingespeist wird, setzt sich gemäß dem Ausführungsbeispiel der Figur 2 aus einem DC-Anteil, der mittels des Wechselrichters 15 bereitgestellt wird, und aus einem AC-Anteil zusammen, der mittels des Hilfsumformers 16 bereitgestellt wird. Entsprechend gilt für die Übertragungsspannung U in der Gleichspannungsverbindung, dass U = Uac + Udc, wobei |Udc| > |Uac|.

In Figur 3 ist ein Umrichter 25 für eine der Anlagen 1, 14 bzw. 20 der Figuren 1 bis 3 dargestellt. Der Umrichter 25 ist zwischen einem dreiphasigen Wechselspannungsanschluss 26 und einem Anschluss 27 geschaltet. Der Wechselspannungsanschluss 26 umfasst dabei einen Transformator 261. Ist der Umrichter 25 für einen Betrieb im Mittelspannungsbereich ausgelegt, so ist der Transformator 261 entsprechend ein Mittelspannungstransformator. Der Umrichter 25 ist einerseits mit einer Gleichspannungsverbindung oder einer einphasigen Wechselspannungsleitung, wechselspannungsseitig mit einem dreiphasigen Wechselspannungsnetz verbindbar. Der Umrichter 25 ist ein modularer Mehrstufenumrichter (M2C). Der M2C weist zwischen dem Anschluss 27 und der Wechselspannungsanschluss 26 angeordnete Leistungshalbleiterventile 121-126 auf.

Jedes Leistungshalbleiterventil 121-126 umfasst eine Reihenschaltung von zweipoligen Schaltmodulen 127 sowie eine Glättungsdrossel 128. Im in Figur 3 dargestellten Ausführungsbeispiel sind alle Schaltmodule 127 gleichartig aufgebaut, was jedoch im Allgemeinen nicht erforderlich ist. Ebenfalls ist die Anzahl der Schaltmodule 127 grundsätzlich beliebig und kann von der in Figur 3 dargestellten Anzahl von drei Schaltmodulen je nach Anwendung abweichen.

Jedes Schaltmodul 127 umfasst vier Halbleiterschalteinheiten 130. Jede Halbleiterschalteinheit 130 kann beispielsweise als ein integrated gate bipolar transistor (IGBT), dem jeweils eine Freilaufdiode 301 antiparallel geschaltet ist, ausgebildet sein. Ferner umfasst jedes Schaltmodul 127 einen Energiespeicher in Form eines Kondensators 131. Die Schaltmodule 127 sind somit als Vollbrückenschaltungen ausgebildet. Die Halbleiterschalteinheiten 130 der Schaltmodule 127 sind mittels einer Steuereinrichtung voneinander unabhängig ansteuerbar.

Anstelle der Vollbrückenschaltungen können die Schaltmodule auch beispielsweise als dem Fachmann bekannte Halbbrückenschaltungen realisiert werden.

Figur 4 zeigt eine schematische Darstellung eines Ausführungsbeispiels eines erfindungsgemäßen Verfahrens. Das Verfahren kann mittels einer der Anlagen 1, 14 bzw. 20 der Ausführungsbeispiele der Figuren 1 bis 3 durchgeführt werden.

In einem Verfahrensschritt 201 wird mittels der Umrichteranlage 7 eine elektrische Leistung einer Wechselspannungsquelle, beispielsweise dem Versorgungsnetz 8 in eine Übertragungsleistung umgewandelt wird, die einen DC-Anteil und einen AC-Anteil aufweist.

In einem Verfahrensschritt 202 wird die Übertragungsleistung in die Gleichspannungsverbindung 4 eingespeist und mittels der Gleichspannungsverbindung 4 übertragen.

In einem Verfahrensschritt 203 wird der AC-Anteil mittels der Kopplungseinrichtung 9 aus der Gleichspannungsverbindung 4 ausgekoppelt. In einem weiteren Verfahrensschritt 204 werden mittels des Frequenzumrichters 10 der Kopplungseinrichtung 9 eine Frequenz, eine Amplitude und eine Phasenlage des AC-Anteils an die Anforderungen des ersten Wechselspannungsnetzes 3 angepasst. In einem Verfahrensschritt 205 wird der an das erste Wechselspannungsnetz 3 angepasste AC-Anteil der Übertragungsleistung in das erste Wechselspannungsnetz 3 eingespeist, so dass eine Energieversorgung im ersten Wechselspannungsnetz 3 gewährleistet ist.

## Patentansprüche

1. Anlage (1) zum Übertragen elektrischer Leistung mit
- einem unidirektionalen Gleichrichter (2), der mit einem ersten Wechselspannungsnetz (3) verbindbar ist,
- einer Umrichteranlage (7), die über eine Gleichspannungsverbindung (4) mit dem unidirektionalen Gleichrichter (2) verbunden ist, wobei mittels der Umrichteranlage (7) eine elektrische Leistung einer Wechselspannungsquelle (8) in eine Übertragungsleistung umwandelbar ist, die einen DC-Anteil und einen AC-Anteil aufweist, und in die Gleichspannungsverbindung (4) einspeisbar ist, sowie
- einer Kopplungseinrichtung (9) zum Auskoppeln des AC-Anteils der Übertragungsleistung aus der Gleichspannungsverbindung (4) und zum Einspeisen des AC-Anteils in das erste Wechselspannungsnetz (3),
**dadurch gekennzeichnet, dass** die Kopplungseinrichtung (9) einen Frequenzumrichter (10) zum Umformen einer Frequenz, Amplitude und Phasenlage des AC-Anteils umfasst, wobei
der Frequenzumrichter (10) eingangsseitig in einer Parallelschaltung zum unidirektionalen Gleichrichter (2) mit der Gleichspannungsverbindung (4) und ausgangsseitig mit dem ersten Wechselspannungsnetz (3) verbindbar ist, wobei
ein erster eingangsseitiger Wechselspannungsanschluss (12) des Frequenzumrichters (10) über eine erste Kapazität (131) mit einem ersten Gleichspannungspol (5) der Gleichspannungsverbindung und ein zweiter eingangsseitiger Wechselspannungsanschluss (12) des Frequenzumrichters (10) über eine zweite Kapazität (132) mit einem zweiten Gleichspannungspol (6) der Gleichspannungsverbindung (4) verbindbar sind.

2. Anlage (1) nach Anspruch 1, wobei der Frequenzumrichter (10) ein Mittelspannungs-Frequenzumrichter ist.

3. Anlage (1) nach Anspruch 2, wobei der Frequenzumrichter (10) ein modularer Mehrstufenfrequenzumrichter ist.

4. Anlage (20) nach einem der Ansprüche 1 bis 3, wobei die Kopplungseinrichtung (9) einen Parallelzweig umfasst, der sich zwischen einem ersten und einem zweiten Gleichspannungspol (5, 6) der Gleichspannungsverbindung (4) erstreckt, und in dem eine erste und eine zweite Kapazität angeordnet sind, wobei ein erster eingangsseitiger Wechselspannungsanschluss (28) des Frequenzumrichters (10) mit einem Potenzialpunkt zwischen den beiden Kapazitäten und der Frequenzumrichter (10) ausgangsseitig dem ersten Wechselspannungsnetz (3) verbindbar ist.

5. Anlage (1, 20) nach einem der vorangehenden Ansprüche, wobei die UmrichterAnlage einen Spannungszwischenkreisumrichter (7) umfasst, der gleichspannungsseitig mit der Gleichspannungsverbindung (4) und wechselspannungsseitig mit einem zweiten Wechselspannungsnetz (8) verbindbar ist.

6. Anlage (14) nach Anspruch 5, wobei der Spannungszwischenkreisumrichter (7) ein modularer Mehrstufenumrichter ist.

7. Anlage (14) nach einem der Ansprüche 1 bis 6, die Umrichteranlage (7) umfassend
- einen Wechselrichter (15), der gleichspannungsseitig mit der Gleichspannungsverbindung (4) und wechselspannungsseitig mit einem zweiten Wechselspannungsnetz (8) verbindbar ist, und
- einen Hilfsumformer (16), der eingangsseitig mit dem zweigen Wechselspannungsnetz (8) und ausgangsseitig parallel zum Wechselrichter (15) mit der Gleichspannungsverbindung (4) verbindbar und dazu eingerichtet ist, eine Eingangswechselspannung in den AC-Anteil der Übertragungsspannung umzuwandeln.

8. Anlage (14) nach Anspruch 7, wobei der Wechselrichter (15) ein selbstgeführter Umrichter ist.

9. Anlage (14) nach Anspruch 8, wobei der Spannungszwischenkreisumrichter (15) ein modularer Mehrstufenumrichter ist.

10. Anlage (1) nach einem der vorangehenden Ansprüche, wobei der unidirektionale Gleichrichter (2) ein Diodengleichrichter ist.

11. Verfahren zum Übertragen elektrischer Leistung in ein erstes Wechselspannungsnetz (3), das mittels eines unidirektionalen Gleichrichters (2) und einer Gleichspannungsverbindung (4) mit einer Umrichteranlage (7) verbindbar ist, bei dem
- mittels der Umrichteranlage (7) eine elektrische Leistung einer Wechselspannungsquelle (8) in eine Übertragungsleistung umgewandelt wird, die einen DC-Anteil und einen AC-Anteil aufweist,
- die Übertragungsleistung in die Gleichspannungsverbindung (4) eingespeist und mittels der Gleichspannungsverbindung (4) übertragen wird,
- der AC-Anteil mittels einer Kopplungseinrichtung (9) aus der Gleichspannungsverbindung (4) ausgekoppelt und in das erste Wechselspannungsnetz (3) eingespeist wird, wobei die Kopplungseinrichtung (9) einen Frequenzumrichter (10) umfasst, mittels dessen eine Frequenz, eine Amplitude und eine Phasenlage des AC-Anteils vor der Einspeisung in das erste Wechselspannungsnetz (3) an das erste Wechselspannungsnetz (3) angepasst werden.

## Claims

1. System (1) for transmitting electrical power, having
- a unidirectional rectifier (2) which can be connected to a first AC voltage network (3),
- a converter system (7) which is connected to the unidirectional rectifier (2) via a DC voltage connection (4), wherein an electrical power from an AC voltage source (8) can be converted, by means of the converter system (7), into a transmission power comprising a DC component and an AC component and can be fed into the DC voltage connection (4), and
- a coupling device (9) for coupling the AC component of the transmission power from the DC voltage connection (4) and for feeding the AC component into the first AC voltage network (3),
**characterized in that**
the coupling device (9) comprises a frequency converter (10) for transforming a frequency, an amplitude and a phase angle of the AC component, wherein
the frequency converter (10) can be connected, on the input side, to the DC voltage connection (4) in a manner connected in parallel with the unidirectional rectifier (2) and can be connected, on the output side, to the first AC voltage network (3), wherein
a first input-side AC voltage connection (12) of the frequency converter (10) can be connected to a first DC voltage pole (5) of the DC voltage connection via a first capacitance (131), and a second input-side AC voltage connection (12) of the frequency converter (10) can be connected to a second DC voltage pole (6) of the DC voltage connection (4) via a second capacitance (132).

2. System (1) according to Claim 1, wherein the frequency converter (10) is a medium-voltage frequency converter.

3. System (1) according to Claim 2, wherein the frequency converter (10) is a modular multi-level frequency converter.

4. System (20) according to one of Claims 1 to 3, wherein the coupling device (9) comprises a parallel branch which extends between a first DC voltage pole (5) and a second DC voltage pole (6) of the DC voltage connection (4) and in which a first capacitance and a second capacitance are arranged, wherein a first input-side AC voltage connection (28) of the frequency converter (10) can be connected to a potential point between the two capacitances, and the frequency converter (10) can be connected, on the output side, to the first AC voltage network (3).

5. System (1, 20) according to one of the preceding claims, wherein the converter system comprises a voltage source converter (7) which can be connected, on the DC voltage side, to the DC voltage connection (4) and can be connected, on the AC voltage side, to a second AC voltage network (8).

6. System (14) according to Claim 5, wherein the voltage source converter (7) is a modular multi-level converter.

7. System (14) according to one of Claims 1 to 6, the converter system (7) comprising
- an inverter (15) which can be connected, on the DC voltage side, to the DC voltage connection (4) and can be connected, on the AC voltage side, to a second AC voltage network (8), and
- an auxiliary transformer (16) which can be connected, on the input side, to the second AC voltage network (8) and can be connected, on the output side, to the DC voltage connection (4) in parallel with the inverter (15) and is configured to convert an input AC voltage into the AC component of the transmission voltage.

8. System (14) according to Claim 7, wherein the inverter (15) is a self-commutated converter.

9. System (14) according to Claim 8, wherein the voltage source converter (15) is a modular multi-level converter.

10. System (1) according to one of the preceding claims, wherein the unidirectional rectifier (2) is a diode rectifier.

11. Method for transmitting electrical power into a first AC voltage network (3) which can be connected to a converter system (7) by means of a unidirectional rectifier (2) and a DC voltage connection (4), in which
- an electrical power from an AC voltage source (8) is converted, by means of the converter system (7), into a transmission power having a DC component and an AC component,
- the transmission power is fed into the DC voltage connection (4) and is transmitted by means of the DC voltage connection (4),
- the AC component is coupled from the DC voltage connection (4) by means of a coupling device (9) and is fed into the first AC voltage network (3), wherein the coupling device (9) comprises a frequency converter (10) which is used to adapt a frequency, an amplitude and a phase angle of the AC component to the first AC voltage network (3) before being fed into the first AC voltage network (3).

## Revendications

1. Installation (1) de transport de puissance électrique comprenant
- un redresseur (2) unidirectionnel, qui peut être relié à un premier réseau (3) de tension alternative,
- une installation (7) convertisseur, qui est reliée au redresseur (2) unidirectionnel par une liaison (4) de tension continue, dans laquelle, au moyen de l'installation (7) de convertisseur, une puissance électrique d'une source (8) de tension alternative peut être transformée en une puissance de transport, qui a une proportion de courant continu et une proportion de courant alternatif, et qui peut être injectée dans la liaison (4) de tension continue, ainsi que
- un dispositif (9) de couplage pour découpler la proportion de courant alternatif de la puissance de transport de la liaison (4) de tension continue et pour injecter la proportion de courant alternatif dans le premier réseau (3) de tension alternative,
**caractérisée en ce que**
le dispositif (9) de couplage comprend un convertisseur (10) de fréquence pour transformer une fréquence, une amplitude et une position en phase de la proportion de courant alternatif, dans laquelle
le convertisseur (10) de fréquence peut être relié du côté de l'entrée à la liaison (4) de tension continue suivant un circuit en parallèle avec le redresseur (2) unidirectionnel et du côté de la sortie au réseau (3) de tension alternative,
dans laquelle
une première borne (12) de tension alternative du côté de l'entrée du convertisseur (10) de fréquence peut, par une première capacité (131), être reliée à un premier pôle (5) de tension continue de la liaison de tension continue et une deuxième borne (12) de tension alternative du côté de l'entrée du convertisseur (10) de fréquence peut, par une deuxième capacité (132), être reliée à un deuxième pôle (6) de tension continue de la liaison (4) de tension continue.

2. Installation (1) suivant la revendication 1, dans laquelle le convertisseur (10) de fréquence est un convertisseur de fréquence de moyenne tension.

3. Installation (1) suivant la revendication 2, dans laquelle le convertisseur (10) de fréquence est un convertisseur de fréquence modulaire à plusieurs étages.

4. Installation (20) suivant l'une des revendications 1 à 3, dans laquelle le dispositif (9) de couplage comprend une branche en parallèle, qui s'étend entre un premier et un deuxième pôle (5, 6) de tension continue de la liaison (4) de tension continue et dans laquelle sont montées une première et une deuxième capacité, une première borne (28) de tension alternative du côté de l'entrée et du convertisseur (10) de fréquence pouvant être reliée à un point de potentiel entre les deux capacités et le convertisseur (12) de fréquence pouvant être relié du côté de la sortie au premier réseau (3) de tension alternative.

5. Installation (1, 20) suivant l'une des revendications précédentes, dans laquelle l'installation de convertisseur comprend un onduleur (7) à circuit intermédiaire de tension, qui peut être relié du côté de la tension continue à la liaison (4) de tension continue et du côté de la tension alternative à un deuxième réseau (8) de tension alternative.

6. Installation (14) suivant la revendication 5, dans laquelle l'onduleur (7) à circuit intermédiaire de tension est un onduleur modulaire à plusieurs étages.

7. Installation (14) suivant l'une des revendications 1 à 6, l'installation (7) de l'onduleur comprenant
- un onduleur (15), qui peut être relié du côté de la tension continue à la liaison (4) de tension continue et du côté de la tension alternative à un deuxième réseau (8) de tension alternative, et
- un transformateur (16) auxiliaire, qui peut être relié du côté de l'entrée au deuxième réseau (8) de tension alternative et du côté de la sortie en parallèle à l'onduleur (15) à la liaison (4) de tension continue et qui est conçu pour transformer une tension alternative d'entrée en la proportion de courant alternatif de la tension de transport.

8. Installation (14) suivant la revendication 7, dans laquelle l'onduleur (15) est un convertisseur à commutation automatique.

9. Installation (14) suivant la revendication 8, dans laquelle l'onduleur (15) à circuit intermédiaire de tension est un onduleur modulaire à plusieurs étages.

10. Installation (1) suivant l'une des revendications précédentes, dans laquelle le redresseur (2) unidirectionnel est un redresseur à diode.

11. Procédé de transport de puissance électrique à un premier réseau (3) de tension alternative, qui peut être relié à une installation (7) d'onduleur au moyen d'un redresseur (2) unidirectionnel et d'une liaison (4) de tension continue, dans lequel
- au moyen de l'installation (7) d'onduleur, on transforme une puissance électrique d'une source (8) de tension alternative en une puissance de transport, qui a une proportion de courant continu et une proportion de courant alternatif,
- on injecte la puissance de transport dans la liaison (4) de tension continue et on la transmet au moyen de la liaison (4) de tension continue,
- on découple la proportion de courant alternatif de la liaison (4) de tension continue au moyen d'un dispositif (9) de couplage et on l'injecte dans le premier réseau (3) de tension alternative, le dispositif (9) de couplage comprenant un convertisseur (10) de fréquence, au moyen duquel une fréquence, une amplitude et une position en phase de la proportion de courant alternatif peuvent, avant l'injection dans le premier réseau (3) de tension alternative, être adaptées au premier réseau (3) de tension alternative
